# EUROPÄISCHE PATENTSCHRIFT

(11) **EP 3 198 179 B1**
(45) Veröffentlichungstag und Bekanntmachung des Hinweises auf die Patenterteilung: **16.10.2019**
(21) Anmeldenummer: 15766168.7
(22) Anmeldetag: 21.09.2015
(51) Int. Cl.: F16L 25/00

(54) **VERBINDUNGSANORDNUNG FÜR EIN WELLROHR**
CONNECTING ASSEMBLY FOR A CORRUGATED TUBE
SYSTÈME DE LIAISON POUR UN TUBE ONDULÉ

(30) Priorität: 22.09.2014 DE 102014219076
(43) Veröffentlichungstag der Anmeldung: 02.08.2017
(60) Teilanmeldung: 19181944.0
(73) Patentinhaber: Fränkische Industrial Pipes GmbH & Co. KG, 97486 Königsberg (DE)
(72) Erfinder: GIROLA, Andreas Enrico, 8330 Pfäffikon ZH (CH)
(74) Vertreter: Herzog, Markus
(86) Internationale Anmeldenummer: PCT/EP2015/071564
(87) Internationale Veröffentlichungsnummer: WO 2016/046114

(56) Entgegenhaltungen:
- EP-A1- 0 330 350
- EP-A1- 1 845 299
- JP-A- 2014 052 023
- US-A- 5 527 072

## Beschreibung

Die Erfindung betrifft eine Verbindungsanordnung gemäß dem Oberbegriff des Anspruchs 1.

Derartige Verbindungsanordnungen sind beispielsweise aus der WO 1998/ 040 656 A1 bekannt. Gemäß einer ersten in dieser Schrift offenbarten Aus-führungsvariante umfasst die Verbindungsanordnung zwei Rasteinheiten, deren Rastelementträger jeweils kreisbogenförmig ausgebildet und an dem Grundkörper schwenkbar angelenkt sind. Dieses Konzept bedingt einen komplizierten und beschädigungsanfälligen Aufbau sowohl des Grundkörpers als auch der Rasteinheiten. Bei einer zweiten Ausführungsvariante weist die Rasteinheit einen U-förmig ausgebildeten Rastelementträger auf, wobei die Rastelemente nur an dem Basisschenkel der U-Form vorgesehen sind. Diese Ausführungsvariante vermag daher keine zuverlässige Verbindung zwischen dem Grundkörper und dem Wellrohr sicherzustellen.

Ferner sei an dieser Stelle auf die Dokumente EP 1 845 299 A1, JP 2014 052023 A, US 5 527 072 A und EP 0 330 250 A1 hingewiesen.

Demgegenüber ist es Aufgabe der Erfindung, eine Verbindungsanordnung der gattungsgemäßen Art bereitzustellen, welche einerseits einfach aufge-baut ist, andererseits aber auch eine zuverlässige Verbindung von Grund-körper und Wellrohr, beispielsweise hinsichtlich der Dichtheit der Verbindung, gewährleistet.

Diese Aufgabe wird erfindungsgemäß durch eine Verbindungsanordnung nach Anspruch 1 gelöst. Auf diese Weise ist zum einen sichergestellt, dass das Wellrohr allseitig von der Rasteinheit gehalten wird. Zum anderen ist hierfür lediglich eine einzige Rasteinheit erforderlich.

Erfindungsgemäß sind die Rastelemente längs des Umfangs des als Schlitzring ausgebildeten Rastelementträgers in im Wesentlichen lückenloser Folge angeordnet. Diese Ausgestaltung ist beispielsweise für den Fall vorteilhaft, dass die Maschine bzw. Anlage, an der die erfindungsgemäße Verbindungsanordnung verbaut ist, mit einem Hoch-druckreinigungsgerät gereinigt werden soll. In diesem Fall können die über den gesamten Umfang des Schlitzrings im Wesentlichen lückenlos neben-einander angeordneten Rastelemente eine Prallwand bilden, die die Wucht des auftreffenden Wassers von den in Einführrichtung dahinter angeordneten Dichtungsmitteln der Verbindungsanordnung fern hält. Diese Dichtungsmittel brauchen daher nur noch gegen im Wesentlichen drucklos anstehendes Wasser abzudichten. In diesem Zusammenhang ist auf die Normengruppe IP x9K, insbesondere die Norm IP 69K, zu verweisen, die Prüfkriterien für die Reinigung mittels eines Hochdruckreinigungsgeräts unter verschiedenen vorbestimmten Winkeln enthalten.

Die Funktion der Prallwand können die Rastelemente noch besser erfüllen, wenn mit Ausnahme der beidseits des Schlitzes angeordneten Rastelemente einander benachbarte Rastelemente mittels eines Häutchens miteinander verbunden sind. Vorzugsweise ist dieses Häutchen aus dem gleichen Material gebildet wie die Rastelemente, beispielsweise Kunststoff. Zwar sind die Häutchen so dünn auszulegen, dass sie beim Aufweiten der Rastelemente infolge des Einführens des Wellrohrs reißen können. Jedoch brauchen nicht notwendigerweise alle Häutchen zu reißen. Insbesondere in den dem Schlitz des Schlitzrings benachbarten Abschnitten brauchen sich die Rastelemente beim Einführen des Wellrohrs weniger stark aufzuweiten, da hier auch der Rastelementträger dem eingeführten Wellrohr elastisch ausweichen kann. Die von den nicht gerissenen Häutchen gebildeten Verbindungen zwischen einander benachbarten Rastelementen bilden eine weitere Dichtung, die das Eindringen von Wasser erschwert. Vorteilhafterweise sind die Häutchen weniger als 0,1 mm, vorzugsweise weniger als 0,05 mm, dick.

Um verhindern zu können, dass sich die Rasteinheit selbsttätig vom Grundkörper löst, wird vorgeschlagen, dass die Rasteinheit wenigstens ein Sicherungselement umfasst, welches mit einem zugeordneten Gegensicherungselement des Grundkörpers in einen die Rasteinheit am Grundkörper sichernden Sicherungseingriff bringbar ist. Vorteilhafterweise kann dieses wenigstens eine Sicherungselement als Sicherungsvorsprung ausgebildet sein, während das Gegensicherungselement als Sicherungsausnehmung, vorzugsweise als eine, die Umfangswand des Grundkörpers durchsetzende Sicherungsdurchbrechung, ausgebildet sein kann. Dabei hat insbesondere die Ausführung der Sicherungsausnehmung als Sicherungsdurchbrechung den Vorteil, dass die Herstellung des Sicherungseingriffs visuell überprüft werden kann. Hierfür ist es ferner vorteilhaft, wenn das Material der Rasteinheit und das Material des Grundkörpers zueinander einen farblichen Kontrast aufweisen.

Wie sich aus der vorstehenden Diskussion der Rasteinheit ergibt, hat diese verschiedene Funktionen zu erfüllen, neben dem sicheren Halt des Wellrohrs beispielsweise auch die Sicherstellung ihres eigenen Halts am Grundkörper. Um alle diese Funktionen zuverlässig erfüllen zu können, ist es vorteilhaft, wenn die Rasteinheit ein Basiselement umfasst, das mit Rastelementträger einstückig verbunden ist.

Beispielsweise kann das wenigstens eine Sicherungselement an dem Basiselement ausgebildet sein.

Zusätzlich oder alternativ kann das Basiselement wenigstens eine Führungsfläche aufweisen und kann der Grundkörper wenigstens eine Gegenführungsfläche aufweisen, welche zu Beginn des Einsetzens der Rasteinheit in den Grundkörper miteinander in Führungseingriff bringbar sind und im Zuge des weiteren Einsetzens der Rasteinheit in den Grundkörper aneinander abgleiten.

In einer Weiterbildung der Erfindung kann an dem Grundkörper wenigstens eine Führungsfläche ausgebildet sein, welche z.B. aus dem Grundkörper ausgenommen ist und mit dem wenigstens einen Sicherungselement zusammenwirkt. Dabei kann die Führungsfläche für das Sicherungselement beispielsweise im Wesentlichen V-förmig ausgebildet sein, wobei an der Spitze der V-Form die entsprechende Sicherungsausnehmung angeordnet sein kann und wobei sich die V-Form bis zu der Umfangsöffnung in dem Grundkörper hin öffnen kann. Ferner kann die V-förmige Führungsfläche eine zur Spitze der V-Form hin abnehmende Tiefe aufweisen. Der Querschnitt der Führungsfläche kann vorteilhafterweise an eine mit der Führungsfläche in Eingriff tretende Fläche des entsprechenden Sicherungselements angepasst sein.

Beim Einführen der Rasteinheit in den Grundkörper kann das wenigstens eine Sicherungselement mit der wenigstens einen ihm zugehörigen Führungsfläche, vorteilhafterweise an der breitesten und tiefsten Stelle der V-Form, in Eingriff treten und kann somit während des weiteren Einführens der Rasteinheit zu der dem Sicherungselement zugehörigen Sicherungsausnehmung geführt werden.

Zusätzlich oder alternativ kann das Basiselement wenigstens eine in Einführrichtung gerichtete Anlagefläche oder/und wenigstens eine entgegen der Einführrichtung gerichtete Anlagefläche aufweisen, welche jeweils mit einer zugeordneten Gegenanlagefläche des Grundkörpers in Kraftübertragungseingriff bringbar sind. Dabei kann das Zusammenwirken der wenigstens einen in Einführrichtung weisenden Anlagefläche mit der jeweils zugehörigen Gegenanlagefläche den Widerstand bieten, der erforderlich ist, um beim Einführen des Wellrohrs in die Verbindungsanordnung die Rastelemente der in den Grundkörper eingesetzten Rasteinheit so weit elastisch auslenken zu können, dass sich die Wellenberge des Wellrohrs an den freien Enden der Rastelemente vorbeibewegen können. Wurde das Wellrohr vollständig in die Verbindungsanordnung eingeschoben, so schwenken die freien Enden der Rastelemente unter der Wirkung ihrer Eigenelastizität zurück und greifen in ein Wellental des Wellrohrs ein. Versucht man nun, das Wellrohr wieder aus der Verbindungsanordnung herauszuziehen, so werden die Rastelemente derart beaufschlagt, dass sie noch stärker in das Wellental des Wellrohrs eingreifen. Gleichzeitig tritt die wenigstens eine entgegen der Einführrichtung gerichtete Anlagefläche der Rasteinheit mit der jeweils zugehörigen Gegenanlagefläche des Grundkörpers in Kraftübertragungseingriff. Auf diese Weise wird ein zerstörungsfreies Lösen des Wellrohrs aus der Verbindungsanordnung verhindert. Nachzutragen ist noch, dass sich die Richtungsangabe "eine Fläche weist in eine bestimmte Richtung" auf die Richtung der Flächennormalen dieser Fläche bezieht, die sich in den an diese Fläche angrenzenden freien Raum erstreckt.

Um die vorstehend erläuterten Funktionen zuverlässig erfüllen zu können, ist es vorteilhaft, wenn das Basiselement U-förmig ausgebildet ist.

Um das Basiselement mechanisch robust und widerstandsfähig mit dem Rastelementträger verbinden zu können, wird vorgeschlagen, dass der Basisschenkel und vorzugsweise wenigstens einer der Seitenschenkel, noch bevorzugter beide Seitenschenkel, der U-Form unmittelbar mit dem Rastelementträger einstückig verbunden sind. Dies ist insbesondere im Hinblick auf die Weiterleitung der vom Wellrohr ausgehenden Kräfte von den Rastelementen über den Rastelementträger und weiter über das Basiselement in den Grundkörper vorteilhaft.

Wie vorstehend bereits angedeutet wurde, kann das wenigstens eine Sicherungselement an dem Basiselement angeordnet sein. Vorzugsweise kann es an einem der Seitenschenkel der U-Form angeordnet sein.

Um trotz der Tatsache, dass das Basiselement lediglich U-förmig ausgebildet ist und somit zumindest in den dem Schlitz benachbarten Abschnitten des Rastelementträgers die vom Wellrohr ausgehenden Kräfte nicht unmittelbar an den Grundkörper weiterleiten kann, auch in diesem Bereich eine zuverlässige Kraftweiterleitung bereitstellen zu können, wird in Weiterbildung der Erfindung vorgeschlagen, dass in den dem Schlitz benachbarten Abschnitten des Rastelementträgers auf der von den Rastelementen abgewandten Seite des Rastelementträgers eine Mehrzahl von entgegen der Einführrichtung weisenden Anlageelementen vorgesehen ist, welche mit einer zugeordneten Gegenanlagefläche des Grundkörpers in Kraftübertragungseingriff bringbar sind. Diese Anlageelemente übernehmen in dem Winkelbereich, über den sich das Basiselement nicht erstreckt, die Funktion der entgegen der Einführrichtung gerichteten Anlagefläche des Basiselements. Insgesamt ergibt sich somit ein über den Umfang des Rohrs gleichmäßiger Kraftschluss der Verbindung.

Um sicherstellen zu können, dass die Rasteinheit in der richtigen Orientierung in den Grundkörper eingesetzt wird, in der die Rastelemente auf das in die Verbindungsanordnung eingeführte Wellrohr eine Widerhakenwirkung ausüben können, wird vorgeschlagen, dass am Grundkörper ein Orientierungshilfevorsprung vorgesehen ist, der in die Umfangsöffnung hineinragt, während an der Rasteinheit, vorzugsweise am Basiselement der Rasteinheit, eine zugehörige Orientierungshilfeausnehmung ausgebildet ist. Durch das Zusammenwirken des Orientierungshilfevorsprungs mit der Orientierungshilfeausnehmung kann zusätzlich zu dem durch das wenigstens eine Sicherungselement bereitgestellten Verdrehschutz ein weiterer Schutz gegen unerwünschtes Verdrehen der Rasteinheit bereitgestellt werden.

Wie sich aus der vorstehenden Erläuterung ergibt, ist es erforderlich, zuerst die Rasteinheit vom Grundkörper zu lösen, wenn man das Wellrohr wieder von der Verbindungsanordnung entfernen möchte. Um ein unbeabsichtigtes Lösen verhindern zu können, ist die Rasteinheit jedoch vorzugsweise derart in die Umfangsöffnung eingesetzt, dass kein Abschnitt der Rasteinheit über den Rand der Umfangsöffnung hinausragt. Um gleichwohl ein Lösen der Rasteinheit vom Grundkörper ermöglichen zu können, wird vorgeschlagen, dass an der Rasteinheit, vorzugsweise am Basiselement der Rasteinheit, eine Lösehilfeausnehmung vorgesehen ist. In diese Lösehilfeausnehmung kann ein Lösewerkzeug eingeführt werden, beispielsweise die Spitze eines Schraubendrehers, insbesondere eines Schraubendrehers für Flachschlitzschrauben. Vorteilhafterweise ist die Lösehilfeausnehmung dem Rand der Umfangsöffnung benachbart angeordnet, um den Grundkörper als Widerlager zum Heraushebeln der Rasteinheit mittels des Lösewerkzeugs verwenden zu können. Beim Herausziehen der Rasteinheit aus dem Grundkörper werden die dem Schlitz des Schlitzring benachbarten Abschnitte des Rastelementträgers entgegen ihrer Eigenelastizität aufgeweitet, so dass sie sich am Wellrohr vorbeibewegen können.

Nachzutragen ist noch, dass die Verbindungsanordnung ferner ein Dichtungselement aufweisen kann, welches die Außenumfangsfläche des Wellrohrs zur Innenumfangsfläche des Grundkörpers hin abdichtet. Das Dichtungselement kann daher vorteilhafterweise zwischen der Außenumfangsfläche des Wellrohrs und der Innenumfangsfläche des Grundkörpers angeordnet sein. Vorteilhafterweise ist der Rohrabschnitt in Einführrichtung des Wellrohrs gesehen hinter der Rasteinheit angeordnet.

Das Dichtungselement kann beispielsweise einen Rohrabschnitt umfassen. An der Außenseite oder/und der Innenseite des Rohrabschnitts können Dichtlippen vorgesehen sein. Die inneren Dichtlippen können dabei derart positioniert sein, dass wenigstens eine von ihnen mit dem Gipfelabschnitt eines Wellenbergs des Wellrohrs in Dichtungseingriff bringbar ist. Darüber hinaus können die inneren Dichtlippen so angeordnet sein, dass auch bei Wellrohren mit unterschiedlicher Profilteilung (grob und fein) und somit unterschiedlichen Abständen aufeinander folgender Wellenberge mindestens eine Dichtlippe in Dichteingriff mit einem Wellenberg steht.

In diesem Zusammenhang ist darauf hinzuweisen, dass die inneren Dichtlippen und die äußeren Dichtlippen zueinander versetzt angeordnet sein können. Dies bietet den Vorteil, eine Pressung und damit eine zu hohe Spannung im Material verhindern zu können. Hohe Spannungen bergen nämlich die Gefahr, ein Kriechen des Materials hervorzurufen, das im Laufe der Zeit Undichtigkeiten des Dichtungselements nach sich ziehen kann.

Ferner kann an dem von der Rasteinheit entfernten Ende des Rohrabschnitts ein nach radial innen weisender Kragen vorgesehen sein. Dieser kann als zusätzliche stirnseitige Dichtung für das Ende des Wellrohrs dienen. Aus herstellungstechnischen Gründen kann auf diesen radial inneren Kragen auch verzichtet werden. Schließlich kann an dem der Rasteinheit benachbarten Ende des Rohrabschnitts ein nach radial außen weisender Kragen vorgesehen sein. Dieser Kragen kann dafür Sorge tragen, dass das Dichtungselement beim Einführen des Wellrohrs an Ort und Stelle gehalten und nicht vom Wellrohr unerwünschterweise verschoben wird. Zudem stellt dieser Kragen eine zusätzliche Barriere gegenüber unter Druck anstehendem Wasser dar.

Nachzutragen ist noch, dass das Dichtungselement aus einem gummielastischen Material gefertigt sein, beispielsweise TPE (**T**hermo**p**lastischem **E**lastomer) oder EPDM (**E**thylen-**P**ropylen-**D**ien-**K**autschuk).

Nachzutragen ist ferner, dass die erfindungsgemäße Rasteinheit und/oder der Grundkörper aus Kunststoff gefertigt sein kann bzw. können, beispielsweise PA (**P**oly**a**mid), insbesondere PA6 und/oder PA12, oder PP (**P**oty**p**ropylen) oder PVDF (**P**oly**v**inyli**d**en**f**luorid). Darüber hinaus können sie als Spritzgussteil gefertigt sein, wobei insbesondere der Grundkörper vorzugsweise unter Verwendung einer lediglich zwei Formhälften umfassenden Spritzgussform hergestellt werden kann.

Die Erfindung wird im Folgenden anhand der beigefügten Zeichnung an einem Ausführungsbeispiel näher erläutert werden. Es stellt dar:
- Figur 1: eine perspektivische Explosionsdarstellung einer erfindungsgemäßen Verbindungsanordnung mit zugehörigem Wellrohr;
- Figur 2: eine geschnittene Seitenansicht der Verbindungsanordnung gemäß Figur 1 mit eingeführtem Wellrohr;
- Figur 3: eine in Einführrichtung gesehene Ansicht der Rasteinheit;
- Figur 4: eine entgegen der Einführrichtung gesehene Ansicht der Rasteinheit;
- Figur 5: eine geschnittene Seitenansicht des Grundkörpers der Verbindungsanordnung gemäß Figur 1;
- Figur 6: eine geschnittene Seitenansicht des Dichtungselements der Verbindungsanordnung gemäß Figur 1; und
- Figur 7: eine geschnittene Seitenansicht einer weiteren Ausführungsform des Grundkörpers der Verbindungsanordnung.

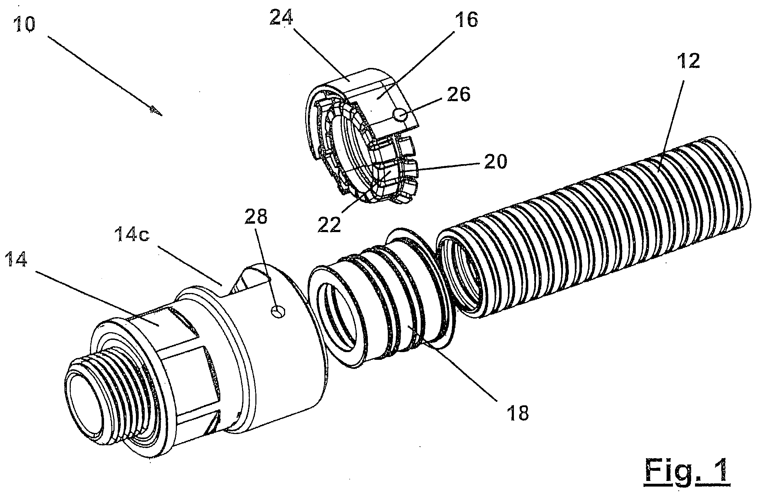

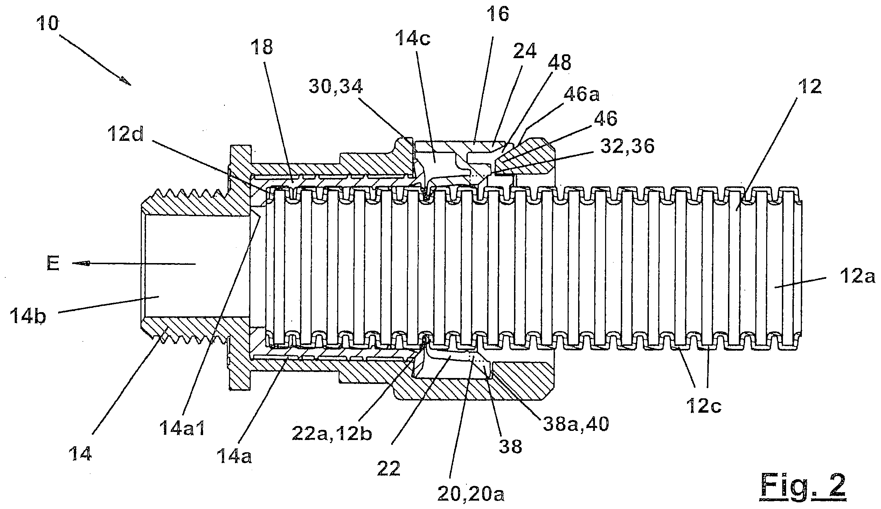

In den Figuren 1 und 2 ist eine erfindungsgemäße Verbindungsanordnung ganz allgemein mit 10 bezeichnet. Die Verbindungsanordnung 10 ist zur Verbindung mit einem Wellrohr 12 bestimmt und umfasst hierzu einen Grundkörper 14, eine Rasteinheit 16 und ein Dichtungselement 18. Während Figur 1 eine Explosionsdarstellung der verschiedenen Komponenten zeigt, stellt Figur 2 diese im verbundenen Zustand dar.

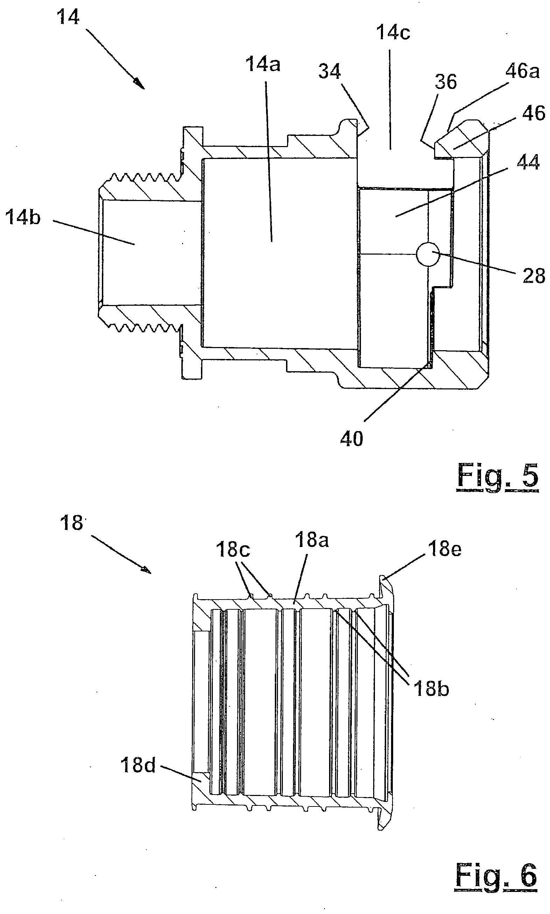

Der Grundkörper 14 weist eine Aufnahmevertiefung 14a auf (siehe auch Figur 5), welche zur Aufnahme des in Einführrichtung E eingeführten Wellrohrs 12 dient (Figur 2), so dass im verbundenen Zustand gemäß Figur 2 ein zentraler Durchgang 14b des Grundkörpers 14 mit einem zentralen Durchgang 12a des Wellrohrs 12 in Verbindung steht. Die fluiddichte Ausbildung dieser Verbindung wird durch das Dichtungselement 18 sichergestellt, das zwischen der Innenumfangsfläche der Aufnahmevertiefung 14a des Grundkörpers 14 und der Außenumfangsfläche des Wellrohrs 12 angeordnet ist.

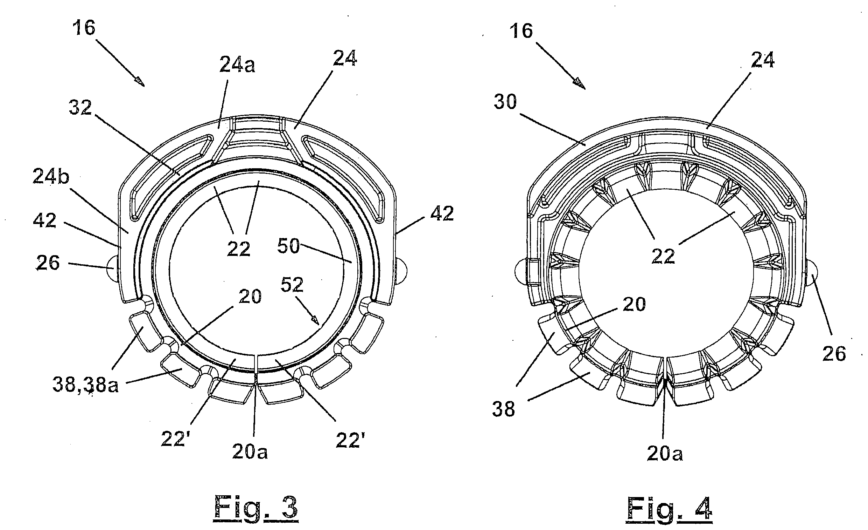

Im verbundenen Zustand gemäß Figur 2 ist ferner die Rasteinheit 16 in eine Umfangsöffnung 14c des Grundkörpers 14 eingesetzt und sichert das Wellrohr 12 in der Aufnahmevertiefung 14a. Die Rasteinheit 16 umfasst hierzu einen als Schlitzring ausgebildeten Rastelementträger 20, längs dessen Umfang eine Mehrzahl von als Rasthäkchen ausgebildeten Rastelementen 22 angeordnet ist (siehe auch Figur 4). Die freien Enden 22a der Rastelemente 22 greifen in dem verbundenen Zustand gemäß Figur 2 in ein Wellental 12b des Wellrohrs 12 ein und widersetzen sich Widerhaken-artig einem Herausziehen des Wellrohrs 12 aus der Aufnahmevertiefung 14a.

Die Erstreckung des Rastelementträgers 20 ist in Figur 2 gepunktet angedeutet. Man erkennt, dass der Rastelementträger 20 kein massives Bauteil zu sein braucht. Vielmehr wird er lediglich von einem dünnen Materialsteg der Rasteinheit 16 gebildet, der sich bis auf den Schlitz 20a über 360° erstreckt (siehe auch Figuren 3 und 4).

Der Rastelementträger 20 ist mit einem Basiselement 24 der Rasteinheit 16 einstückig verbunden, das mechanisch robust ausgebildet ist und somit die Handhabung der Rasteinheit 16 ermöglicht, ohne Risiko einer Beschädigung der Rastelemente 22. Das Basiselement 24 ist U-förmig ausgebildet und umfasst einen Basisschenkel 24a und zwei Seitenschenkel 24b. In dem dargestellten Ausführungsbeispiel sind sowohl der Basisschenkel 24a als auch die beiden Seitenschenkel 24b mit dem Rastelementträger 20 unmittelbar einstückig verbunden, d.h. nicht nur über den "Umweg" über ein anderes Teil, beispielsweise einen der anderen Schenkel der U-Form.

An den beiden Seitenschenkeln 24b ist jeweils ein Sicherungsvorsprung 26 ausgebildet, der in dem in die Umfangsöffnung 14c des Grundkörpers 14 eingesetzten Zustand der Rasteinheit 16 in eine Sicherungsdurchbrechung 28 des Grundkörpers eingreift und so die Rasteinheit 16 bei noch nicht eingeführtem Wellrohr 12 gegen unbeabsichtigtes Herausfallen aus dem Grundkörper 14 sichert.

Ferner dienen die Oberflächen 42 der beiden Seitenschenkel 24b als Führungsflächen, welche beim Einsetzen der Rasteinheit 16 in die Umfangsöffnung 14c in der durch den Pfeil R angedeuteten Einsetzrichtung mit zugeordneten Gegenführungsflächen 44 des Grundkörpers 14 (siehe Figur 5) zusammenwirken.

Ferner sind an dem Basiselement 24 Anlageflächen 30 und 32 ausgebildet, die mit zugehörigen Gegenanlageflächen 34 bzw. 36 des Grundkörpers 14 zusammenwirken, um von dem Wellrohr 12 über die Rastelemente 22 in die Rasteinheit 16 eingeleitete Kräfte an den Grundkörper 14 weiterleiten zu können. Da sich das Basiselement 24 aufgrund seiner U-Form nicht über den gesamten Umfang des Wellrohrs 12, erstreckt, sind an dem Rastelementträger 20 auf dessen von den Rastelementen 22 abgewandter Seite Anlageelemente 38 vorgesehen, deren freie Enden 38a zur Kraftweiterleitung mit einer Gegenanlagefläche 40 des Grundkörpers 14 zusammenwirken.

Wie am besten in Figur 2 zu erkennen ist, verfügt der Grundkörper 14 über einen Orientierungshilfevorsprung 46, der im verbundenen Zustand von Grundkörper 14 und Rasteinheit 16 in eine Orientierungshilfeausnehmung 48 der Rasteinheit 16 eingreift. Durch das Zusammenwirken des Orientierungshilfevorsprungs 46 mit der Orientierungshilfeausnehmung 48 kann sichergestellt werden, dass die Rasteinheit 16 in der richtigen Orientierung, d.h. mit in Einführrichtung E weisenden Rastelementen 22, in die Umfangsöffnung 14c des Grundkörpers 14 eingesetzt wird. Würde man versuchen, die Rasteinheit 16 mit entgegen der Einführrichtung E weisenden Rastelementen 22 in die Umfangsöffnung 14c einzusetzen, so würden die Rastelemente 22 mit dem Orientierungshilfevorsprung 46 kollidieren, wodurch das Einsetzen der Rasteinheit 16 in den Grundkörper 14 verhindert werden würde. Außerdem stellt das Zusammenwirken des Orientierungshilfevorsprungs 46, mit der Orientierungshilfeausnehmung 48 einen Verdrehschutz für die Rasteinheit 16 dar.

Wie in Figur 2 ferner dargestellt ist, weist der Orientierungshilfevorsprung 46 eine geneigte Oberfläche 46a auf und ist von dem Basisschenkel 24a des Basiselements 24 der Rasteinheit 16 mit Abstand angeordnet. In den auf diese Weise von der Orientierungshilfeausnehmung 48 gebildeten Spalt kann ein Lösewerkzeug, beispielsweise die Spitze eines Flachschlitz-Schraubendrehers, eingeführt werden. Schwenkt man das Lösewerkzeug in Figur 2 im Uhrzeigersinn und verwendet den Orientierungshilfevorsprung 46 als Widerlager, so wird die Rasteinheit 16 unter Aufheben der Verrastung der Sicherungsvorsprünge 26 mit den Sicherungsausnehmungen 28 etwas aus dem Grundkörper 14 herausgehebelt. Anschließend kann man die Rasteinheit 16 am Basiselement 24 ergreifen und vollständig vom Grundkörper lösen. Auf diese Weise bildet die Orientierungshilfeausnehmung 48 gleichzeitig auch eine Lösehilfeausnehmung. Grundsätzlich ist es jedoch auch denkbar, die Orientierungshilfeausnehmung und die Lösehilfeausnehmung als voneinander unabhängig ausgebildete Ausnehmungen vorzusehen.

Wie in Figur 2 dargestellt ist, ist das Dichtungselement 18 in Einführrichtung E hinter der Rasteinheit 16 angeordnet. Wie besser in Figur 6 zu erkennen ist, ist das Dichtungselement 18 im Wesentlichen rohrförmig ausgebildet. In dem dargestellten Ausführungsbeispiel sind sowohl an der Außenseite als auch an der Innenseite des Rohrabschnitts 18a Dichtlippen 18b bzw. 18c vorgesehen. Die inneren Dichtlippen 18b können dabei derart positioniert sein, dass wenigstens eine von ihnen mit dem Gipfelabschnitt eines Wellenbergs 12c des Wellrohrs 12 in Dichtungseingriff bringbar ist. Ferner ist in dem dargestellten Ausführungsbeispiel an dem von der Rasteinheit 16 entfernten Ende des Rohrabschnitts 18a ein nach radial innen weisender Kragen 18d vorgesehen. Dieser kann eine zusätzliche stirnseitige Dichtung für das Ende des Wellrohrs 12 bilden. Zur Vereinfachung der Herstellung des Dichtungselements 18 kann aber auf diesen radial inneren Kragen 18d auch verzichtet werden. Schließlich ist an dem der Rasteinheit 16 benachbarten Ende des Rohrabschnitts 18a ein nach radial außen weisender Kragen 18e vorgesehen sein. Dieser Kragen 18e verhindert, dass das Dichtungselement 18 beim Einführen des Wellrohrs 12 von diesem unerwünschterweise verschoben wird.

Zur Herstellung eines für das Einführen eines Wellrohrs 12 vorbereiteten Zustands der Verbindungsanordnung 10 ordnet man zunächst das Dichtungselement 18 in der Aufnahmevertiefung 14a an, bis es an deren Boden 14a1 anliegt. Anschließend führt man die Rasteinheit 16 in die Umfangsöffnung 14c ein, bis die Sicherungsvorsprünge 26 in die Sicherungsausnehmungen 28 einrasten.

Führt man nun das Wellrohr 12 in die Verbindungsanordnung 10 ein, so läuft das Ende 12d des Wellrohrs 12 gegen die Rastelemente 22 an und schiebt die Anlagefläche 30 der Rasteinheit 16 in Anlage gegen die Gegenanlagefläche 34 des Grundkörpers 14. Durch das Zusammenwirken der Flächen 30, 34 wird der Widerstand erzeugt, der erforderlich ist, damit sich beim weiteren Einführen des Wellrohrs 12 in die Verbindungsanordnung 10 die Rastelemente 22 so weit elastisch auslenken lassen, dass sich die Wellenberge 12c des Wellrohrs 12 an den freien Enden der Rastelemente 22 vorbeibewegen können. Dabei muss in einem Umfangsabschnitt, in dem der Rastelementträger 20 einstückig mit dem Basiselement 24 der Rasteinheit 16 verbunden ist, die elastische Auslenkbewegung alleine durch eine elastische Verformung der Rastelemente 22 aufgebracht werden, während sie sich in den an den Schlitz 20a des Rastelementträgers 20 benachbarten Umfangsabschnitten aus einer elastischen Verformung des Rastelementträgers 20 einerseits und einer elastischen Verformung der Rastelemente 22 andererseits zusammensetzen kann. In diesen Umfangsabschnitten werden die Rastelemente 22 daher weniger stark beansprucht. Wurde das Wellrohr 12 vollständig in die Verbindungsanordnung 10 eingeschoben, so schwenken die freien Enden der Rastelemente 22 unter der Wirkung ihrer Eigenelastizität zurück und greifen in ein Wellental 12b des Wellrohrs 12 ein.

Versucht man nun, das Wellrohr 12 wieder aus der Verbindungsanordnung 10 herauszuziehen, so werden die Rastelemente 22 derart beaufschlagt, dass sie noch stärker in das Wellental 12b des Wellrohrs 12 eingreifen. Gleichzeitig tritt die Anlagefläche 32 der Rasteinheit 16 mit der zugeordneten Gegenanlagefläche 36 des Grundkörpers 14 in Eingriff. Auf diese Weise wird ein zerstörungsfreies Lösen des Wellrohrs 12 aus der Verbindungsanordnung 10 verhindert.

Wenn man das Wellrohr 12 wieder aus der Verbindungsanordnung 10 herausnehmen möchte, ist es erforderlich, zuerst die Rasteinheit 16 vom Grundkörper 14 zu lösen. Wie vorstehend beschrieben, hebelt man hierzu die Rasteinheit 16 unter Zuhilfenahme eines Lösewerkzeugs so weit aus der Umfangsöffnung 14c des Grundkörpers heraus, dass man die Rasteinheit 16 an ihrem Basiselement 24 ergreifen und vollständig aus der Umfangsöffnung 14c herausziehen kann. Dabei werden die dem Schlitz 20a benachbarten Abschnitte des Rastelementträgers 22 entgegen ihrer Eigenelastizität aufgeweitet, so dass sie sich am Wellrohr 22 vorbeibewegen können.

Nachzutragen ist noch, dass die Rastelemente 22 längs des Umfangs des Rastelementträgers 20 in im Wesentlichen lückenloser Folge angeordnet sind, d.h. im Wesentlichen ohne Abstand voneinander. Dies hat den Vorteil, dass die Rastelemente 22 eine Prallwand für Wasser bilden, das beispielsweise von einem Hochdruckreinigungsgerät ausgestoßen wird und mit Wucht auf die Verbindungsanordnung 10 auftrifft. Um diesen Prallwandeffekt noch verbessern zu können, können die Rastelemente 22 - mit Ausnahme der dem Schlitz 20a unmittelbar benachbarten Rastelemente 22' - im gerade frisch gefertigten Zustand mittels Kunststoffhäutchen 50 miteinander verbunden sein. In der Darstellung der Figur 3 bilden diese Kunststoffhäutchen 50 zusammen mit den Oberflächen der Rastelemente 22 eine bis auf den Schlitz 20a durchgehende Ringfläche. Man erkennt die Trennstellen der Rastelemente 22 lediglich anhand kleiner Kerben 52. Beim Aufweiten der Rastelemente 22 infolge des Einführens des Wellrohrs 12 müssen nicht notwendigerweise alle Häutchen 50 reißen. Insbesondere in den dem Schlitz 20a benachbarten Abschnitten brauchen sich die Rastelemente 22 beim Einführen des Wellrohrs 12 weniger stark aufzuweiten, da hier auch der Rastelementträger 20 dem eingeführten Wellrohr 12 elastisch ausweicht. Die von den nicht gerissenen Kunststoffhäutchen 50 gebildeten Verbindungen zwischen einander benachbarten Rastelementen 22 verbessern die Prallwandwirkung, die das Eindringen von Wasser erschwert.

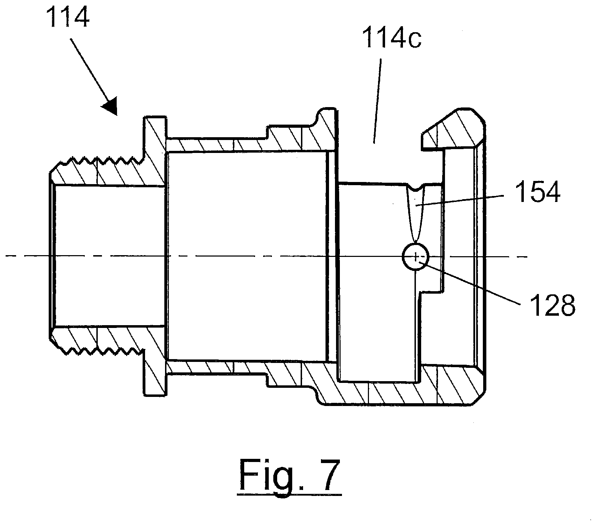

Die in Figur 7 dargestellte Ausführungsform des Grundkörpers 114 unterscheidet sich von dem z.B. in den Figuren 1 und 5 dargestellten Ausführungsbeispiel des Grundkörpers 14 insbesondere durch die Führungsfläche 154. Daher sind in Figur 7 analoge Teile mit gleichen Bezugszeichen versehen wie in den Figuren 1 und 5, jedoch vermehrt um die Zahl 100. Der Grundkörper 114 gemäß Figur 7 wird im Folgenden daher nur insoweit beschrieben werden, als er sich von der Ausführungsform gemäß Figuren 1 und 5 unterscheidet, wobei hiermit ansonsten ausdrücklich auf die Beschreibung der Ausführungsform gemäß Figuren 1 und 5 verwiesen sei.

Figur 7 weist eine Führungsfläche 154 auf, welche im Wesentlichen V-förmig ausgebildet ist und sich von einer Umfangsöffnung 114c zu einer Sicherungsausnehmung 128 hin verjüngend erstreckt. Die Führungsfläche 154 weist dabei eine von der Öffnung der V-Form zu der Spitze der V-Form abnehmende Tiefe auf.

Der Querschnitt der V-förmigen Führungsfläche 154 ist an die gemäß des Ausführungsbeispiels aus Figuren 3 und 4 dargestellte Halbkugel-Form der Sicherungselemente 26 angepasst.

An dieser Stelle sei nachgetragen, dass an dem in Figur 7 dargestellten Querschnitt des Grundkörpers 114 nur eine Führungsfläche 154 beschrieben worden ist. Passend zu der Ausführungsform der Rasteinheit 16, z.B. gemäß Figuren 3 und 4, welche zwei Sicherungsvorsprünge 26 umfasst, weist der Grundkörper 114 ebenfalls zwei Sicherungsausnehmungen 126 und zwei zugehörige Führungsflächen 154 auf.

Auf diese Weise werden die beiden Sicherungsvorsprünge 26 der Rasteinheit 16, gemäß der Ausführungsform aus z.B. Figuren 3 und 4, von dem ersten Moment des In-Eingriff-Tretens mit dem Grundkörper 114 an entlang der beiden Führungsflächen 154 bis zum In-Eingriff-Treten mit den beiden Sicherungsausnehmungen 126 geführt.

## Patentansprüche

1. Verbindungsanordnung (10), die zur Verbindung mit einem Ende (12d) eines Wellrohrs (12) ausgebildet und bestimmt ist, die Verbindungsanordnung (10) umfassend:
• einen Grundkörper (14) mit einem zentralen Durchgang (14b), der in eine an einem Ende des Grundkörpers (14) vorgesehene Aufnahmevertiefung (14a) mündet,
wobei die Aufnahmevertiefung (14a) zur Aufnahme des längs einer Einführrichtung (E) einführbaren Wellrohrs (12) ausgebildet ist, und
• eine durch eine Umfangsöffnung (14c) des Grundkörpers (14) in die Aufnahmevertiefung (14a) einsetzbare Rasteinheit (16) mit einem Rastelementträger (20) und einer Mehrzahl von mit dem Rastelementträger (20) einstückig ausgebildeten Rastelementen (22),
wobei die Rastelemente (22) dazu ausgebildet und bestimmt sind, in ein Wellental (12b) des Wellrohrs (12) einzugreifen und sich einer Bewegung des Wellrohrs (12) entgegen der Einführrichtung (E) aus der Aufnahme heraus zu widersetzen,
wobei der Rastelementträger (20) als einen die Wandung des Rastelementträgers (20) vollständig durchbrechenden Schlitz (20a) aufweisender Schlitzring ausgebildet ist, und wobei die Rastelemente (22) längs des Umfangs des Rastelementträgers (20) gleichmäßig verteilt angeordnet sind, **dadurch gekennzeichnet, dass** die Rastelemente (22) längs des Umfangs des Rastelementträgers (20) in im Wesentlichen lückenloser Folge angeordnet sind, d.h. im Wesentlichen ohne Abstand voneinander.

2. Verbindungsanordnung nach Anspruch 1,
**dadurch gekennzeichnet, dass** mit Ausnahme der beidseits des Schlitzes (20a) des Rastelementträgers (20) angeordneten Rastelemente (22') einander benachbarte Rastelemente (22) mittels eines Häutchens (50) miteinander verbunden sind.

3. Verbindungsanordnung nach einem der Ansprüche 1 oder 2,
**dadurch gekennzeichnet, dass** die Rasteinheit (16) wenigstens ein Sicherungselement (26) umfasst, welches mit einem zugeordneten Gegensicherungselement (28) des Grundkörpers (14) in einen die Rasteinheit (16) am Grundkörper (14) sichernden Sicherungseingriff bringbar ist.

4. Verbindungsanordnung nach Anspruch 3,
**dadurch gekennzeichnet, dass** das wenigstens eine Sicherungselement (26) als Sicherungsvorsprung ausgebildet ist, während das Gegensicherungselement (28) als Sicherungsausnehmung, vorzugsweise als eine, die Umfangswand des Grundkörpers (14) durchsetzende Sicherungsdurchbrechung, ausgebildet ist.

5. Verbindungsanordnung nach einem der Ansprüche 1 bis 4,
**dadurch gekennzeichnet, dass** die Rasteinheit (16) ein Basiselement (24) umfasst, das mit Rastelementträger (20) einstückig verbunden ist.

6. Verbindungsanordnung nach Anspruch 5,
**dadurch gekennzeichnet, dass** das Basiselement (24) wenigstens eine Führungsfläche (42) aufweist und dass der Grundkörper (14) wenigstens eine Gegenführungsfläche (44) aufweist, welche zu Beginn des Einführen der Rasteinheit (16) in den Grundkörper (14) miteinander in Führungseingriff bringbar sind.

7. Verbindungsanordnung nach Anspruch 5 oder 6,
**dadurch gekennzeichnet, dass** das Basiselement (24) wenigstens eine in Einführrichtung (E) gerichtete Anlagefläche (30) oder/und wenigstens eine entgegen der Einführrichtung (E) gerichtete Anlagefläche (32) aufweist, welche jeweils mit einer zugeordneten Gegenanlagefläche (34 bzw. 36) des Grundkörpers (14) in Kraftübertragungseingriff bringbar sind.

8. Verbindungsanordnung nach einem der Ansprüche 5 bis 7,
**dadurch gekennzeichnet, dass** das Basiselement (24) U-förmig ausgebildet ist.

9. Verbindungsanordnung nach Anspruch 8,
**dadurch gekennzeichnet, dass** der Basisschenkel (24a) und vorzugsweise wenigstens einer der Seitenschenkel (24b), noch bevorzugter beide Seitenschenkel (24b), der U-Form unmittelbar mit dem Rastelementträger (20) einstückig verbunden sind.

10. Verbindungsanordnung nach Anspruch 8 oder 9, sofern diese auf Anspruch 3 zurückbezogen sind,
**dadurch gekennzeichnet, dass** wenigstens ein Sicherungselement (26) der Rasteinheit (16) an einem der Seitenschenkel (24b) der U-Form angeordnet ist.

11. Verbindungsanordnung nach einem der Ansprüche 1 bis 10,
**dadurch gekennzeichnet, dass** in den dem Schlitz (20a) des Rastelementträgers (20) benachbarten Abschnitten des Rastelementträgers (20) auf der von den Rastelementen (22) abgewandten Seite des Rastelementträgers (20) eine Mehrzahl von entgegen der Einführrichtung (E) weisenden Anlageelementen (38) vorgesehen ist, welche mit einer zugeordneten Gegenanlagefläche (40) des Grundkörpers (14) in Kraftübertragungseingriff bringbar sind.

12. Verbindungsanordnung nach einem der Ansprüche 1 bis 11,
**dadurch gekennzeichnet, dass** am Grundkörper (14) ein Orientierungshilfevorsprung (46) vorgesehen ist, der in die Umfangsöffnung (14c) hineinragt, während an der Rasteinheit (16), vorzugsweise am Basiselement (24) der Rasteinheit (16), eine zugehörige Orientierungshilfeausnehmung (48) ausgebildet ist.

13. Verbindungsanordnung nach einem der Ansprüche 1 bis 12,
**dadurch gekennzeichnet, dass** an der Rasteinheit (16), vorzugsweise am Basiselement (24) der Rasteinheit (16), eine Lösehilfeausnehmung (48) vorgesehen ist.

14. Verbindungsanordnung nach einem der Ansprüche 1 bis 13,
**dadurch gekennzeichnet, dass** sie ferner ein Dichtungselement (18) umfasst.

## Claims

1. Connection arrangement (10), which is designed and intended for connection to the end (12d) of a corrugated pipe, the connection arrangement (10) comprises:
• a basic body (14) with a central passage (14b), which leads into a receiving recess (14a) provided at the end of the basic body (14), whereby the receiving recess (14a) is designed to accommodate the length of a corrugated pipe (12) inserted in an insertion direction (E), and
• a latch unit (16) deployable through a circumferential opening (14c) of the basic body (14) in the receiving recess (14a) with a latching element carrier (20) and numerous latching elements (22) integrally designed with the latching element carrier (20), whereby the latching element (22) is also designed and intended to impinge a trough (12b) of the corrugated pipe (12) and resist a movement of the corrugated pipe (12) against the insertion direction (E) from the receiver,
whereby the latching element carrier (20) is designed as a slit ring comprising a slit (20a) completely penetrating the wall of the latching element carrier (20), and whereby the latching elements (22) are equally arranged along the circumference of the latching element carrier (20), **characterised in that,** the latch elements (22) are arranged along the circumference of the latching element carrier (20) in essentially seamless sequence, in other words essentially close to each other.

2. Connection arrangement according to claim 1, **characterised in that,** with the exception of the latching elements (22') arranged on both sides of the slit (20a) of the latching element carrier (20), the latching elements (22) neighbouring each other are connected to each other with a membrane (50).

3. Connection arrangement according to one of the claims 1 or 2, **characterised in that,** the latching unit (16) at least encompasses a fuse element (26), which can be brought into a securing engagement secured to the latch unit (16) on the basic body (14) with an attached anti-fuse element (28) of the basic body (14).

4. Connection arrangement according to claim 3, **characterised in that,** a fuse element (26) is at least designed as securing projection, while the anti-fuse element (28) is designed as securing recess, primarily as a securing opening pushing through the circumferential wall of the basic body (14).

5. Connection arrangement according to one of the claims 1 to 4, **characterised in that,** the latch unit (16) comprises a basic element (24), which is integrally connected to the latching element carrier (20).

6. Connection arrangement according to claim 5, **characterised in that,** the basic element (24) features at least one guide surface (42) and that the basic body (14) features at least one mating surface (44), which are brought into the guide operation with each other when starting to introduce the latch unit (16) into basic body (14).

7. Connection arrangement according to claim 5 or 6, **characterised in that,** the basic element (24) at least features a contact surface (30) directed in insertion direction (E) and/or at least a contact surface (32) directed against the insertion direction (E), which are brought into an attached opposing bearing surface (34 or 36) of the basic body (14) in power transmission operation.

8. Connection arrangement according to one of the claims 5 to 7, **characterised in that,** the basic element (24) is U shaped.

9. Connection arrangement according to claim 8, **characterised in that,** the basic leg (24a) and preferably at least one of the side legs (24b), still more preferred both side legs (24b), of the U shape are integrally connected to the latching element carrier (20).

10. Connection arrangement according to claim 8 or 9, provided these refer back to claim 3, **characterized in that,** at least one fuse element (26) of the latch unit (16) is arranged on one of the side legs (24b) of the U shape.

11. Connection arrangement according to one of the claims 1 to 10, **characterised in that,** a plurality of engagement elements (38) pointing against the insertion direction (E) are provided in the sections of the latching element carriers (20) neighbouring the slit (20a) of the latching element carrier (20) on the side of the latching element carrier (20) turned away from the latching elements (22), which can be brought into power transmission operation with an attached opposing bearing surface (40) of the basic body (14).

12. Connection arrangement according to one of the claims 1 to 11, **characterised in that,** a guidance auxiliary projection (46) is provided at the basic body (14), which extends into the circumferential opening (14 c), while on the latching unit (16), preferably on the basic element (24) of the latching unit (16), a corresponding guidance retaining recess (48) is formed.

13. Connection arrangement according to one of the claims 1 to 12, **characterised in that,** a release aid recess (48) is provided on the latching unit (16), preferably the basic element (24) of the latching unit (16).

14. Connection arrangement according to one of the claims 1 to 13, **characterised in that,** it also includes a sealing element (18).

## Revendications

1. Dispositif de liaison (10), qui est conçu pour la liaison avec une extrémité (12d) d'un tube ondulé (12), ce dispositif de liaison (10) comprenant :
• un corps de base (14) avec un passage central (14b), qui débouche dans une cavité de logement (14a) prévue à une extrémité du corps de base (14),
la cavité de logement (14a) étant conçue pour le logement du tube ondulé (12) pouvant être introduit le long d'une direction d'introduction (E) et
• une unité d'encliquetage (16) pouvant être inséré, à travers une ouverture circulaire (14c) du corps de base (14), dans la cavité de logement (14a), avec un support d'éléments d'encliquetage (20) et une pluralité d'éléments d'encliquetage (22) réalisés d'une seule pièce avec le support d'élément d'encliquetage (20),
les éléments d'encliquetage (22) étant conçus pour s'emboîter dans un creux d'ondulation (12b) du tube ondulé (12) et résister à un déplacement du tube ondulé (12) à l'encontre de la direction d'introduction (E) hors du logement,
le support d'éléments d'encliquetage (20) étant conçu comme un anneau fendu comprenant une fente (20a) traversant entièrement la paroi du support d'élément d'encliquetage (20) et les éléments d'encliquetage (22) étant disposés de manière répartie uniformément le long de la circonférence du support d'éléments d'encliquetage (20), **caractérisé en ce que** les éléments d'encliquetage (22) sont disposés, afin de former une succession globalement ininterrompue, le long de la circonférence du support d'éléments d'encliquetage (20), c'est-à-dire globalement sans intervalle entre eux.

2. Dispositif de liaison selon la revendication 1,
**caractérisé en ce que**, à l'exception des éléments d'encliquetage (22') disposés des deux côtés de la fente (20a) du support d'éléments d'encliquetage (20), les éléments d'encliquetage (22) adjacents entre eux sont reliés entre eux au moyen d'une pellicule (50).

3. Dispositif de liaison selon l'une des revendications 1 ou 2,
**caractérisé en ce que** l'unité d'encliquetage (16) comprend au moins un élément de fixation (26) qui peut être amené en emboîtement de fixation, avec un contre-élément de fixation (28) correspondant du corps de base (14), pour la fixation de l'unité d'encliquetage (16) sur le corps de base (14) .

4. Dispositif de liaison selon la revendication 3,
**caractérisé en ce que** l'au moins un élément de fixation (26) est conçu comme une saillie de fixation tandis que le contre-élément de fixation (28) est conçu comme un évidement de fixation, de préférence comme un perçage de fixation traversant la paroi circonférentielle du corps de base (14).

5. Dispositif de liaison selon l'une des revendications 1 à 4,
**caractérisé en ce que** l'unité d'encliquetage (16) comprend un élément de base (24) qui est relié d'une seule pièce avec le support d'élément d'encliquetage (20).

6. Dispositif de liaison selon la revendication 5,
**caractérisé en ce que** l'élément de base (24) comprend au moins une surface de guidage (42) et **en ce que** le corps de base (14) comprend au moins une contre-surface de guidage (44) qui peuvent être amenées en emboîtement de guidage entre elles au début de l'introduction de l'unité d'encliquetage (16) dans le corps de base (14).

7. Dispositif de liaison selon la revendication 5 ou 6,
**caractérisé en ce que** l'élément de base (24) comprend au moins une surface d'appui (30) orientée dans la direction d'introduction (E) et/ou au moins une surface d'appui (32) orientée à l'encontre de la direction d'introduction (E), qui peuvent être amenées chacune en emboîtement de transmission de forces avec une contre-surface d'appui (34 ou 36) correspondante du corps de base (14).

8. Dispositif de liaison selon l'une des revendications 5 à 7,
**caractérisé en ce que** l'élément de base (24) présente la forme d'un U.

9. Dispositif de liaison selon la revendication 8,
**caractérisé en ce que** la branche de base (24a) et de préférence au moins une des branches latérales (24b), de préférence les deux branches latérales (24b), de la forme en U, sont reliées d'une seule pièce avec le support d'éléments d'encliquetage (20).

10. Dispositif de liaison selon la revendication 8 ou 9, si celle-ci se réfère à la revendication 3,
**caractérisé en ce qu'**au moins un élément de fixation (26) de l'unité d'encliquetage (16) est disposé sur une des branches latérales (24b) de la forme en U.

11. Dispositif de liaison selon l'une des revendications 1 à 10,
**caractérisé en ce que**, dans les portions adjacentes à la fente (20a) du support d'éléments d'encliquetage (20), du support d'éléments d'encliquetage (20), sur le côté, opposé aux éléments d'encliquetage (22), du support d'éléments d'encliquetage (20), est prévue une pluralité d'éléments d'appui (38) orientés à l'encontre de la direction d'introduction (E), qui peuvent être amenés en emboîtement de transmission des forces avec une contre-surface d'appui (40) correspondante du corps de base (14).

12. Dispositif de liaison selon l'une des revendications 1 à 11,
**caractérisé en ce que**, sur le corps de base (14), est prévue une saillie d'aide à l'orientation (46), qui dépasse dans l'ouverture circulaire (14c), tandis que, sur l'unité d'encliquetage (16), de préférence sur l'élément de base (24) de l'unité d'encliquetage (16), est réalisé un évidement d'aide à l'orientation (48) correspondant.

13. Dispositif de liaison selon l'une des revendications 1 à 12,
**caractérisé en ce que**, sur l'unité d'encliquetage (16), de préférence sur l'élément de base (24) de l'unité d'encliquetage (16), est prévu évidement d'aide au détachement (48).

14. Dispositif de liaison selon l'une des revendications 1 à 13,
**caractérisé en ce qu'**il comprend en outre un élément d'étanchéité (18).
